# EUROPEAN PATENT APPLICATION

(11) **EP 1 083 522 A2**
(43) Date of publication of application: **14.03.2001**
(21) Application number: 00307791.4
(22) Date of filing: 08.09.2000
(51) Int. Cl.: G06T 17/00

(54) **Method of and apparatus for processing image, recording medium, and program**

(30) Priority: 10.09.1999 JP 25707099
(71) Applicant: Sony Computer Entertainment Inc., Tokyo 107-0052 (JP)
(72) Inventor: Yamamoto, Hiroshi, c/o Sugar & Rockets Inc., Nakano-ku, Tokyo 164-0011 (JP)
(74) Representative: Turner, James Arthur

(57) **Abstract**

An image processing means has a fragmenting unit (100) for fragmenting object data (112) read from an external source for transfer to a data memory (58B), into an optimum data length that matches the storage capacity of the data memory (58B), and adding corrective data required to generate an image which is to be generated with the fragmented data, when the object data (112) is fragmented. The fragmenting unit (100) has a vertex data file generating unit (104) for generating a vertex data file (102) which comprises an array of vertex data of polygons, and a display list generating unit (110) for extracting one or more vertex data which match the storage capacity of the data memory (58B) from the vertex data file (102), registering the extracted vertex data in packets (106), and generating a display list (108) for displaying a three-dimensional image by successively arraying the packets (106).

## Description

This invention relates to methods of and apparatus for processing images, recording media and progams.

Recently, various computer graphics (CG) processing techniques including hidden line processing, hidden surface removal, smooth shading, texture mapping, etc. have been in rapid progress in combination with quickly growing hardware technologies.

According to a general CG processing scheme, a plurality of three-dimensional shapes (objects) are generated by three-dimensional modeling of CAD, and a rendering process is performed by applying colors and shades to the objects, adding optical properties including mirror reflection, diffuse reflection, refraction, transparency, etc. to the objects, adding surface patterns to the objects, and plotting images depending on surroundings such as window and scenery reflections and ambient light.

It has been proposed that object data used to display three-dimensional images employ a data structure composed of an array of vertex data of polygons divided from an object.

According to the proposed data structure, however, if objects of complex shape are to be displayed as three-dimensional graphic images and all images on a display monitor are to be displayed as three-dimensional graphic images, then the data structure becomes so complex that a lot of time is required to perform a programming process for displaying such three-dimensional graphic images.

Various respective aspects and features of the invention are defined in the appended claims.

Embodiments of the present invention relate to a method of and an apparatus for processing images to display objects of complex shape as three-dimensional images and display all images on a display monitor as three-dimensional images, a recording medium which stores a program and data for processing such images, and a program for processing such images.

Embodiments of the present invention can provide a method of and an apparatus for processing images, a recording medium, and a program to easily display objects of complex shape as three-dimensional images and display all images on a display monitor as three-dimensional images.

Embodiments of the present invention can provide a method of and an apparatus for processing images, a recording medium, and a program to simplify the data structure of object data and allow simplified programming for displaying three-dimensional graphics to display objects of complex shape as three-dimensional images and display all images on a display monitor as three-dimensional images.

A method of processing an image according to the present invention comprises the steps of fragmenting object data read from an external source for transfer to a data memory, into a data length optimum for the storage capacity of the data memory, and adding corrective data required to generate an image which is to be generated with the fragmented data, when the object data is fragmented.

An apparatus for processing an image according to the present invention comprises fragmenting means for fragmenting object data read from an external source for transfer to a data memory, into an optimum data length that matches the storage capacity of the data memory, and adding corrective data required to generate an image which is to be generated with the fragmented data, when the object data is fragmented.

According to the present invention, there is also provided a recording medium storing a program and data, the program comprising the steps of fragmenting object data read from an external source for transfer to a data memory, into a data length optimum for the storage capacity of the data memory, and adding corrective data required to generate an image which is to be generated with the fragmented data, when the object data is fragmented.

According to the present invention, there is further provided a program which can be read and executed by a computer, comprising the steps of fragmenting object data read from an external source for transfer to a data memory, into a data length optimum for the storage capacity of the data memory, and adding corrective data required to generate an image which is to be generated with the fragmented data, when the object data is fragmented.

With the above arrangement, even if the object data has such a data structure that it contains minimum information required, when the object data is fragmented, corrective data required to generate an image that is to be generated with the fragmented data is added. Consequently, objects of complex shape can easily be displayed as three-dimensional images and all images on a display monitor can easily be displayed as three-dimensional images.

Inasmuch as the data structure of the object data is simplified, simplified programming for displaying three-dimensional graphics can be performed to display objects of complex shape as three-dimensional images and display all images on the display monitor as three-dimensional images.

The object data may have a data structure comprising an array of plural vertex data of an object, the fragmented data may have a data structure comprising an array of plural vertex data of a polygon, and the corrective data may comprise one or more vertex data extracted from the object data for reuse, and can be combined with vertex data extracted from the object data to construct a polygon.

A vertex data file which comprises an array of vertex data of polygons may be generated, one or more vertex data which match the storage capacity of the data memory may be extracted from the vertex data file and registered in packets, and a display list for displaying a three-dimensional image may be generated by successively arraying the packets.

The vertex data file may be generated by selecting a plurality of vertex data registered in the object data to extract a surface, or using the selected vertex data as corrective data and selecting one or more vertex data registered in the object data and one or more corrective data to extract a surface, extracting polygons from the extracted surface, and generating the vertex data file by arranging the vertex data of the polygons.

The display list may be generated by extracting one or more vertex data which match the storage capacity of the data memory from the vertex data file, registering the extracted vertex data in packets, and arraying the packets in which the extracted vertex data have been registered, into a display list.

The invention will now be described by way of example with reference to the accompanying drawings, throughout which like parts are referred to by like references, and in which:
FIG. 1 is a block diagram of a general arrangement of an entertainment apparatus according to the present invention;
FIG. 2 is a block diagram of a vector operation unit in the entertainment apparatus shown in FIG. 1;
FIG. 3 is a perspective view of a cube;
FIG. 4 is a functional block diagram of a fragmenting means according to the present invention;
FIG. 5 is a diagram showing details of a vertex data file;
FIG. 6 is a diagram showing details of a display list;
FIGS. 7 and 8 are a flowchart of a processing sequence of a vertex data file generating means in the fragmenting means; and
FIG. 9 is a flowchart of a processing sequence of a display list generating means in the fragmenting means.

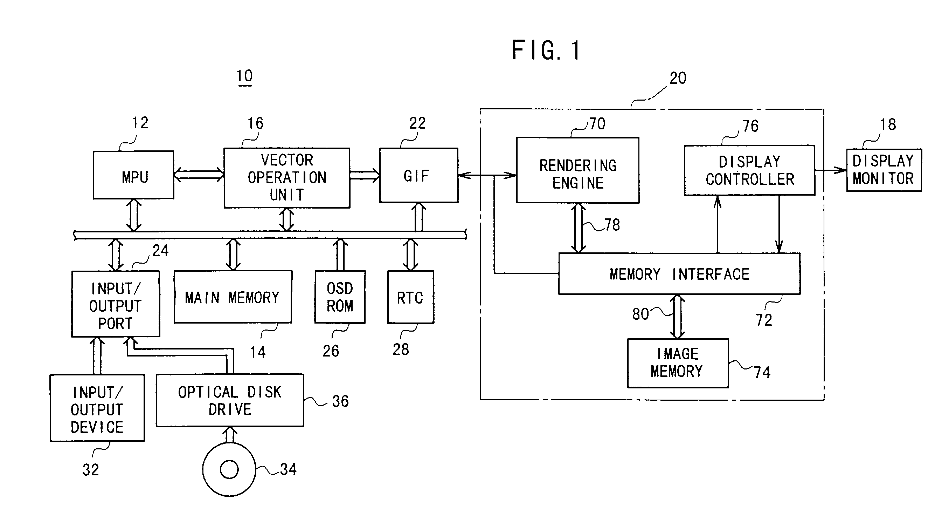

An embodiment in which a method of and an apparatus for processing an image are applied to an entertainment apparatus for performing three-dimensional CG processing, and a recording medium and a program are applied to a recording medium storing a program and data executed by the entertainment apparatus and such a program, will be described below with reference to FIGS. 1 through 9.

As shown in FIG. 1, an entertainment apparatus 10 comprises an MPU 12 for controlling the entertainment apparatus 10, a main memory 14 for storing various programs to be run and various data, a vector operation unit 16 for performing floating-point vector operations required for geometry processing, an image processor 20 for generating image data under the control of the MPU 12 and outputting the generated image data to a display monitor 18, e.g., a CRT, a graphic interface (GIF) 22 for arbitrating transfer paths between the MPU 12, the vector operation unit 16, and the image processor 20, an input/output port 24 for sending data to and receiving data from external devices, a ROM (OSDROM) 26 with an OSD function, which may comprise a flash memory or the like, for controlling the kernel, etc., and a real-time clock 28 having a calendar and clock function.

The main memory 14, the vector operation unit 16, the GIF 22, the OSDROM 26, the real-time clock 28, and the input/output port 24 are connected to the MPU 12 via a main bus 30.

To the input/output port 24, there are connected an input/output device 32 for inputting data (key entry data, coordinate data, etc.) to the entertainment apparatus 10, and an optical disk drive 36 for playing back an optical disk 34 such as a CD-ROM or the like in which various programs and data (object-related data, texture data, etc.) are stored.

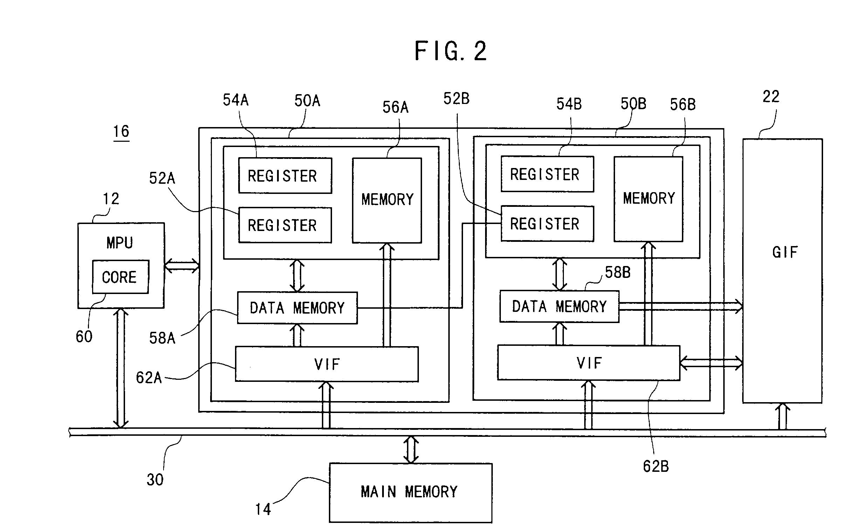

As shown in FIG. 2, the vector operation unit 16 has two vector engines, i.e., first and second vector engines, 50A, 50B. Each of the vector engines 50A, 50B has a plurality of floating-point multiply and accumulate (FMAC) units and floating-point divide (FDIV) units and is controlled by the execution of a program.

The vector engines 50A, 50B have respective 32 4-parallel floating-point registers 52A, 52B, respective 16 integer registers 54A, 54B, respective program memories 56A, 56B, and respective data memories 58A, 58B.

The first vector engine 50A is connected to the MPU 12 by a 128-bit coprocessor bus, for example. Operation resources and registers of the first vector engine 50A can be directly used by the MPU 12 without using the main bus 30 according to coprocessor instructions from an MPU core 60.

Therefore, the first vector engine 50A operates to accelerate complex operations that are programmed by the MPU 12. Since the first vector engine 50A performs fine processing operations, each of the program memory 56A and the data memory 58A has a storage capacity of 4 kilobytes that is smaller than the storage capacity (16 kilobytes) of each of the program memory 56B and the data memory 58B of the second vector engine 50B.

The second vector engine 50B is directly connected to the image processor 20 via the GIF 22. The second vector engine 50B generates a display list, which is directly transferred to the image processor 20 without using the main bus 30.

The second vector engine 50B operates autonomously independently of the MPU 12. Operation results obtained by the second vector engine 50B are written in the data memory 58B, and then transferred via the GIF 22 directly to the image processor 20 with highest priority.

The second vector engine 50B has a VU core capable of accessing the data memory 58B at the same time it accesses the GIF 22 for reading data and accesses a second VPU interface (VIF) 62B, described below, for writing data. Therefore, the data memory 58B is of a suitable double-buffer structure for allowing data transfer and operation to be carried out parallel to each other.

Since the second vector engine 50B is capable of very high-speed processing operations, three-dimensional graphics processing operations that are routinely required are assigned to the second vector engine 50B.

The first and second vector engines 50A, 50B have in their front ends respective packet developing engines that are referred to as first and second VPU interfaces, i.e., first and second VIFs, 62A, 62B.

The second VIF 62B unpacks compressed vertex data based on a tag (VIFtag) attached to the leading end of the vertex data, and transfers the unpacked vertex data directly to the data memory 58B of the second vector engine 50B. The second VIF 62B operates as a preprocessor of the second vector engine 50B.

The GIF 22 arbitrates a plurality of transfer paths, and simultaneously shapes data based on a tag (GIFtag) attached to the leading end of a display list packet and transfers a resultant rendering command to the image processor 20.

Input data is supplied to the GIF 22 selectively via a first path from the data memory 58B in the second vector engine 50B, a second path from the second VIF 62B in the second vector engine 50B, and a third path from the main memory 14.

The first path is assigned to the transfer of a display list processed by the second vector engine 50B. The second path is assigned to the transfer of data, such as on-line-texture, that can be transferred directly to the image processor 20, among data transferred via the second VIF 62B. The third path is assigned to the transfer of a display list that is generated by the MPU 12 and the first vector engine 50A and stored in the main memory 14.

As shown in FIG. 1, the image processor 20 comprises a rendering engine 70, a memory interface 72, an image memory 74, and a display controller 76 such as a programmable CRT controller or the like.

The rendering engine 70 serves to render image data in the image memory 74 via the memory interface 72 based on a rendering command supplied from the MPU 12.

A first bus 78 is connected between the memory interface 72 and the rendering engine 70, and a second bus 80 is connected between the memory interface 72 and the image memory 74. Each of the first and second buses 78, 80 has a 128-bit width, for example, for allowing the rendering engine 70 to render image data in the image memory 74 at a high speed.

The rendering engine 70 is capable of rendering image data of 320 × 240 pixels or image data of 640 × 480 pixels according to the NTSC or PAL system on a real-time fashion, i.e., in 1/60 seconds to 1/30 seconds, more than ten times to several ten times.

The image memory 74 is of a unified memory structure that is able to designate a texture rendering area and a display rendering area as the same area.

The image controller 76 writes texture data read from the optical disk 34 via the optical disk drive 36 or texture data generated in the main memory 14 via the memory interface 72 into the texture rendering area of the image memory 74, and reads image data rendered in the display rendering area of the image memory 74 via the memory interface 72 and outputs the read image data to the display monitor 18 to display an image on its display screen.

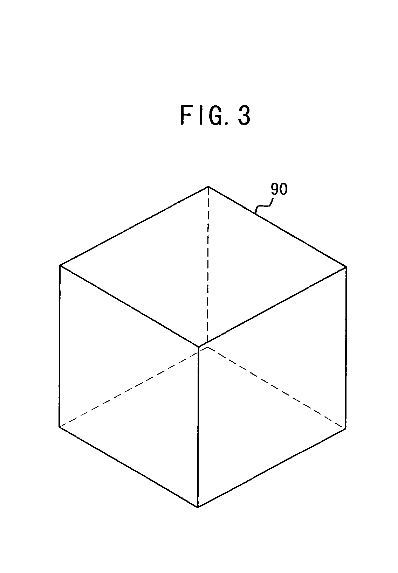

A characteristic function of the entertainment apparatus 10 will be described below with reference to FIGS. 3 through 9.

According to the characteristic function, for transferring object data read from the optical disk 34 via the optical disk drive 36 to the data memory 58B in the second vector engine 50B of the vector operation unit 16, for example, the object data is fragmented into a data length optimum for the storage capacity (16 kilobytes) of the data memory 58B and then transferred.

Specifically, when object data read from the optical disk 34 via the optical disk drive 36 is stored as a display list in the main memory 14, the data length of each of packets of the display list is optimized to match the storage capacity of the data memory 58B in the second vector engine 50B, for example. Each of the packets comprises a tag (VIFtag) for use in the second VIF 62B and vertex data.

At this time, the object data is not simply divided to match the storage capacity of the data memory 58B in the - second vector engine 50B, but each packet is generated by adding corrective data required to generate an image that is to be generated with vertex data included in the packet.

For example, it is assumed that a cube 90 shown in FIG. 3 is to be displayed. Usually, the object data for the cube 90 that is read from the optical disk 34 is represented by an array of vertex data of polygons that are divided from the image of the cube 90. Specifically, the object data is represented by an array of 36 vertex data for the 8 vertexes of the cube 90.

However, for displaying objects of complex shape as three-dimensional images and displaying all images on the display monitor 18 as three-dimensional images, such a data structure is so complex that a lot of time is required to perform a programming process for displaying such three-dimensional graphic images.

One solution is to simplify the data structure of object data, particularly, the array of vertex data. For example, the object data for the cube 90 is represented by 8 vertex data, i.e., as many vertex data as the number of vertexes of the cube 90.

However, even if the object data represented by the 8 vertex data is simply divided into 6 vertex data and 2 vertex data, for example, to match the storage capacity of the data memory 58B, it is not possible to display a three-dimensional image of the cube 90 on the display monitor 18 because the content of each of the packets is not arranged to match the vertex data of a polygon.

According to the present invention, when the object data is divided to match the storage capacity of the data memory 58B, corrective data, i.e., lacking vertex data, are added in order for each packet to include the vertex data of a polygon.

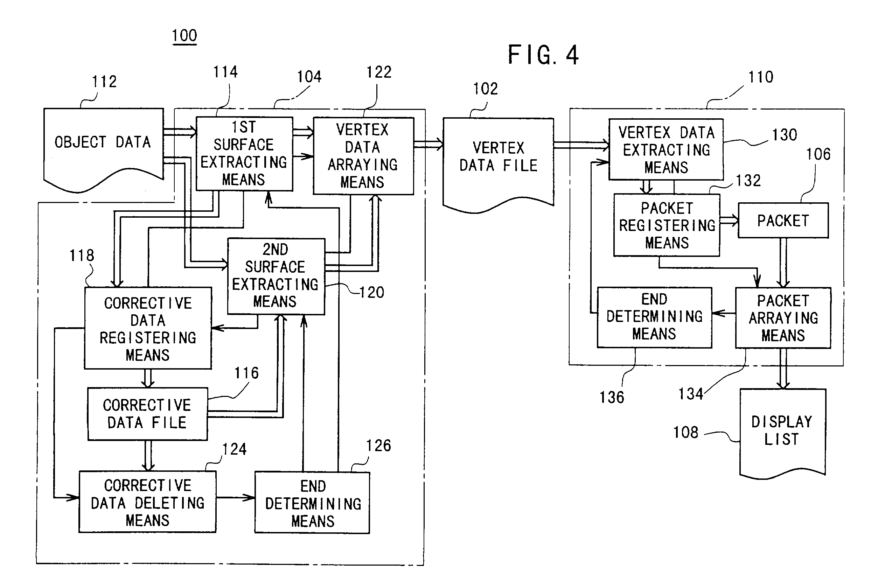

An example of software, i.e., a fragmenting means 100 (see FIG. 4), to perform the above function will be described below with reference to FIGS. 4 through 9.

The fragmenting means 100 is supplied to the entertainment apparatus 10 from a randomly accessible recording medium such as a CD-ROM or a memory card or via a network. It is assumed here that the fragmenting means 100 is read into the entertainment apparatus 10 from the optical disk 34 such as a CD-ROM.

The fragmenting means 100 is downloaded in advance from the optical disk 34 played back by the entertainment apparatus 10 into the main memory 14 of the entertainment apparatus 10 according to a predetermined process, and executed by the MPU 12.

As shown in FIG. 4, the fragmenting means 100 comprises a vertex data file generating means 104 for generating a vertex data file 102 which contains an array of vertex data of polygons, and a display list generating means 110 for extracting one or more vertex data that match the storage capacity of the data memory 58B from the vertex data file 102, registering the extracted vertex data in packets 106, and successively arraying the packets 106 into a display list 108.

The vertex data file generating means 104 has a first surface extracting means 114 for selecting a plurality of vertex data from a number of vertex data registered in object data 112 thereby to extract one surface, a corrective data registering means 118 for registering the selected vertex data as corrective data in a corrective data file 116, a second surface extracting means 120 for selecting one or more vertex data registered in the object data file 112 and one or more corrective data registered in the corrective data file 116 thereby to extract one surface, a vertex data arraying means 122 for extracting polygons from the extracted surfaces and arraying the vertex data of the polygons, a corrective data deleting means 124 for deleting unwanted corrective dada from the corrective data file 116, and an end determining means 126 for determining whether the processing sequence of the vertex data file generating means 104 is completed or not.

The display list generating means 110 has a vertex data extracting means 130 for extracting vertex data of one or more polygons to match the storage capacity of the data memory 58B from the vertex data file 102, a packet registering means 132 for registering the extracted vertex data of one or more polygons in packets 106, a packet arraying means 134 for arraying the packets 106 in which the vertex data have been registered as a display list 108, and an end determining means 136 for determining whether the processing sequence of the display list generating means 110 is completed or not.

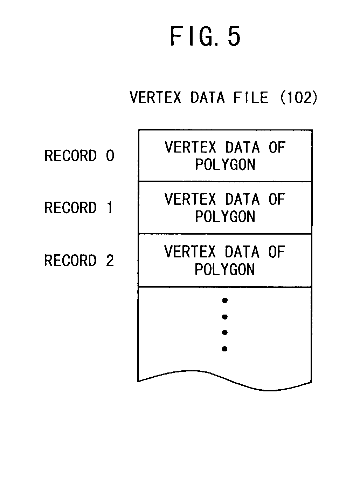

As shown in FIG. 5, the vertex data file 102 stores a plurality of records each having vertex data of a polygon. If a polygon has a triangular shape, then three vertex data are stored in each of the records of the vertex data file 102.

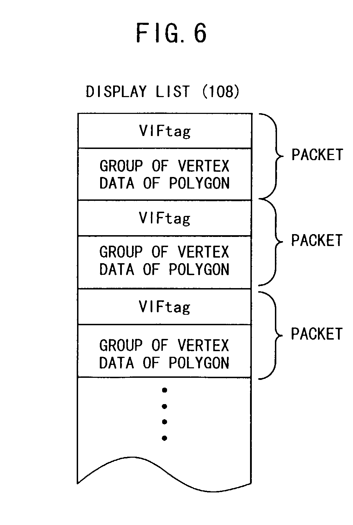

As shown in FIG. 6, the display list 108 contains an array of packets 106 each having a tag (VIFtag) at its leading end and a group of vertex data of a polygon that match the storage capacity of the data memory 58B.

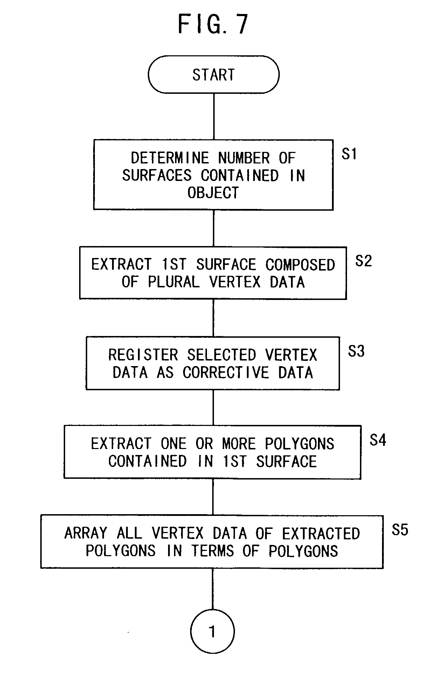

A processing sequence of the fragmenting means 100 will be described below with reference to FIGS. 7 through 9.

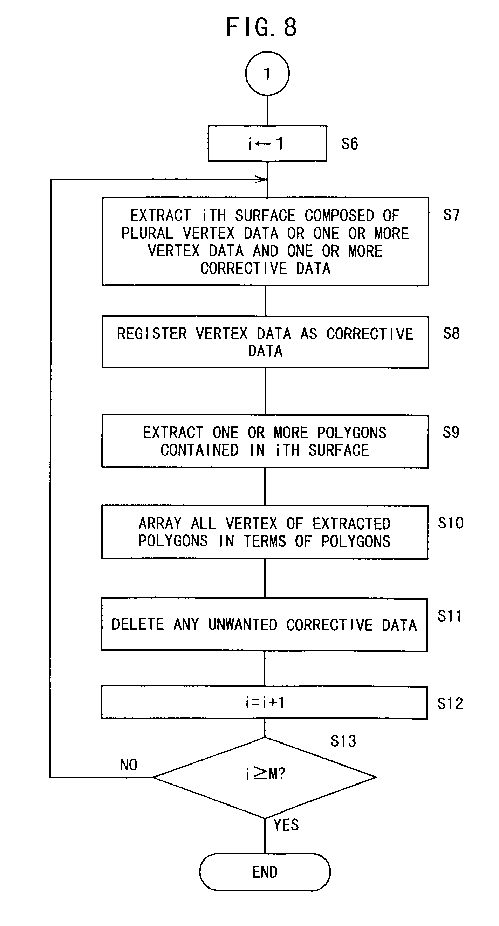

First, the vertex data file generating means 104 of the fragmenting means 100 performs its processing sequence. The processing sequence of the vertex data file generating means 104 will be described below with reference to FIGS. 7 and 8.

In step S1 shown in FIG. 7, the vertex data file generating means 104 determines the number of surfaces contained in an object represented by the object data 112.

In step S2, the first surface extracting means 114 selects a plurality of vertex data from a number of vertex data included in the object data 112, thereby extracting a first surface which comprises the selected vertex data.

In step S3, the corrective data registering means 118 registers the selected vertex data as corrective data in the corrective data file 116.

In step S4, the vertex data arraying means 122 extracts one or more polygons from the first surface. In step S5, the vertex data arraying means 122 arrays all the vertex data of the extracted polygons in terms of polygons.

In step S6 shown in FIG. 8, the vertex data file generating means 104 stores an initial value "1" into an index register i used to retrieve surfaces, thereby initializing the index register i.

In step S7, the first surface extracting means 114 or the second surface extracting means 120 extracts an ith surface composed of a plurality of vertex data or one or more vertex data and one or more corrective data.

In step S8, the corrective data registering means 118 registers the selected vertex data as corrective data in the corrective data file 116.

In step S9, the vertex data arraying means 122 extracts one or more polygons contained in the ith surface. Thereafter, in step S10, the vertex data arraying means 122 arrays all the vertex data of the extracted polygons in terms of polygons.

In step S11, if there are any unwanted corrected data, then the corrective data deleting means 124 deletes the unwanted corrected data from the corrective data file 116.

In step S12, the vertex data file generating means 104 increments the value of the index register i by "1". Thereafter, in step S13, the end determining means 126 decides whether the processing sequence with respect to all the surfaces has been ended or not based on whether or not the value of the index register i is equal to or greater than the number M of surfaces.

If the processing sequence has not been ended, then control goes back to step S7 for arraying the vertex data of the polygons that are contained in a next surface. If the processing sequence has been ended, then the processing sequence of the vertex data file generating means 104 comes to an end. The vertex data file 102 is now completed.

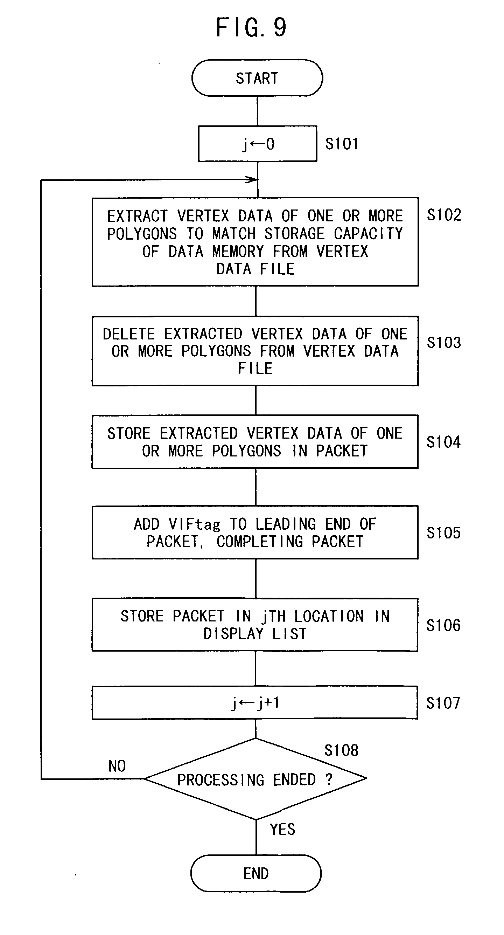

When the processing sequence of the vertex data file generating means 104 is finished, the display list generating means 110 performs its own processing sequence. The processing sequence of the display list generating means 110 will be described below with reference to FIG. 9.

In step S101 shown in FIG. 9, the display list generating means 110 stores an initial value "0" into an index register j used to register packets 106, thereby initializing the index register j.

In step S102, the vertex data extracting means 130 extracts vertex data of one or more polygons to match the storage capacity of the data memory 58B from the vertex data file 102.

In step S103, the vertex data extracting means 130 deletes the extracted vertex data of one or more polygons from the vertex data file 102.

In step S104, the packet registering means 132 registers the extracted vertex data of one or more polygons in a packet 106. Thereafter, in step S105, the packet registering means 132 adds a tag (VIFtag) to the leading end of the packet 106, thus completing the packet 106.

In step S106, the packet arraying means 134 stores the packet into an jth location in the display list 108.

In step S107, the display list generating means 110 increments the value of the index register j by "1". Thereafter, in step S108, the end determining means 136 decides whether all the vertex data registered in the vertex data file 102 have been registered as packets 106 in the display list 108 or not.

If all the vertex data registered in the vertex data file 102 have not been registered, then control returns to step S102 to repeat the processing in step S102 - step S108. If all the vertex data registered in the vertex data file 102 have been registered, then the processing sequence of the display list generating means 110 is ended. Now, the display list 108 for displaying a three-dimensional image is completed.

As described above, for transferring object data 112 read from the optical disk 34 to the data memory 58B in the second vector engine 50B of the vector operation unit 16, for example, the fragmenting means 100 fragments the object data 112 into a data length optimum for the storage capacity of the data memory 58B, and adds corrective data required to generate an image that is to be generated with fragmented data (vertex data of polygons). Therefore, even if the object data 112 has such a data structure that it contains minimum information required, when the object data 112 is fragmented, corrective data required to generate an image that is to be generated with the fragmented data is added. Consequently, objects of complex shape can easily be displayed as three-dimensional images and all images on the display monitor 18 can easily be displayed as three-dimensional images.

Inasmuch as the data structure of the object data 112 is simplified, simplified programming for displaying three-dimensional graphics can be performed to display objects of complex shape as three-dimensional images and display all images on the display monitor 18 as three-dimensional images.

Although a certain preferred embodiment of the present invention has been shown and described in detail, it should be understood that various changes and modifications may be made therein without departing from the scope of the appended claims.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

## Claims

1. A method of processing an image, comprising the steps of:
fragmenting object data (112) read from an external source for transfer to a data memory (58B), into a data length optimum for the storage capacity of said data memory (58B); and
adding corrective data required to generate an image which is to be generated with the fragmented data, when said object data (112) is fragmented.

2. A method according to claim 1, wherein said object data (112) has a data structure comprising an array of plural vertex data of an object, and said fragmented data has a data structure comprising an array of plural vertex data of a polygon, and wherein said corrective data comprises one or more vertex data extracted from said object data (112) for reuse, and can be combined with vertex data extracted from said object data (112) to construct a polygon.

3. A method according to claim 2, further comprising the steps of:
generating a vertex data file (102) which comprises an array of vertex data of polygons;
extracting one or more vertex data which match the storage capacity of said data memory (58B) from said vertex data file (102) and registering the extracted vertex data in packets (106); and
generating a display list (108) for displaying a three-dimensional image by successively arraying said packets (106).

4. A method according to claim 3, wherein said step of generating a vertex data file (102) comprises the steps of:
selecting a plurality of vertex data registered in said object data (112) to extract a surface, or using the selected vertex data as corrective data and selecting one or more vertex data registered in said object data (112) and one or more corrective data to extract a surface;
extracting polygons from the extracted surface; and
generating said vertex data file (102) by arranging the vertex data of the polygons.

5. A method according to claim 3, wherein said step of generating a display list (108) comprises the steps of:
extracting one or more vertex data which match the storage capacity of said data memory (58B) from said vertex data file (102);
registering the extracted vertex data in packets (106); and
arraying said packets (106) in which said extracted vertex data have been registered, into a display list (108).

6. An apparatus for processing an image, comprising:
fragmenting means (100) for fragmenting object data (112) read from an external source for transfer to a data memory (58B), into an optimum data length that matches the storage capacity of said data memory (58B), and adding corrective data required to generate an image which is to be generated with the fragmented data, when said object data (112) is fragmented.

7. An apparatus according to claim 6, wherein said object data (112) has a data structure comprising an array of plural vertex data of an object, and said fragmented data has a data structure comprising an array of plural vertex data of a polygon, and wherein said corrective data comprises one or more vertex data extracted from said object data (112) for reuse, and can be combined with vertex data extracted from said object data (112) to construct a polygon.

8. An apparatus according to claim 7, wherein said fragmenting means (100) comprises:
vertex data file generating means (104) for generating a vertex data file (102) which comprises an array of vertex data of polygons;
display list generating means (110) for extracting one or more vertex data which match the storage capacity of said data memory (58B) from said vertex data file (102), registering the extracted vertex data in packets (106), and generating a display list (108) for displaying a three-dimensional image by successively arraying said packets (106).

9. An apparatus according to claim 8, wherein said vertex data file generating means (104) comprises:
first surface extracting means (114) for selecting a plurality of vertex data registered in said object data (112) to extract a surface;
corrective data registering means (118) for registering the selected vertex data as corrective data;
second surface extracting means (120) for selecting one or more vertex data registered in said object data (112) and one or more corrective data to extract a surface; and
vertex data arraying means (122) for extracting polygons from the extracted surface, and generating said vertex data file (102) by arranging the vertex data of the polygons.

10. An apparatus according to claim 8, wherein said display list generating means (110) comprises:
vertex data extracting means (130) for extracting one or more vertex data which match the storage capacity of said data memory (58B) from said vertex data file (102);
packet registering means (132) for registering the extracted vertex data in said packets (106); and
packet arraying means (134) for arraying said packets (106) in which said extracted vertex data have been registered, into a display list (108).

11. A recording medium storing a program and data, said program comprising the steps of:
fragmenting object data (112) read from an external source for transfer to a data memory (58B), into a data length optimum for the storage capacity of said data memory (58B); and
adding corrective data required to generate an image which is to be generated with the fragmented data, when said object data (112) is fragmented.

12. A recording medium according to claim 11, wherein said object data (112) has a data structure comprising an array of plural vertex data of an object, and said fragmented data has a data structure comprising an array of plural vertex data of a polygon, and wherein said corrective data comprises one or more vertex data extracted from said object data (112) for reuse, and can be combined with vertex data extracted from said object data (112) to construct a polygon.

13. A recording medium according to claim 12, wherein said step of fragmenting object data (112) comprises the steps of:
generating a vertex data file (102) which comprises an array of vertex data of polygons;
extracting one or more vertex data which match the storage capacity of said data memory (58B) from said vertex data file (102) and registering the extracted vertex data in packets (106); and
generating a display list (108) for displaying a three-dimensional image by successively arraying said packets (106).

14. A recording medium according to claim 13, wherein said step of generating a vertex data file (102) comprises the steps of:
selecting a plurality of vertex data registered in said object data (112) to extract a surface;
registering the selected vertex data as corrective data;
selecting one or more vertex data registered in said object data (112) and one or more corrective data to extract a surface; and
extracting polygons from the extracted surface, and arranging the vertex data of the polygons.

15. A recording medium according to claim 13, wherein said step of generating a display list (108) comprises the steps of:
extracting one or more vertex data which match the storage capacity of said data memory (58B) from said vertex data file (102);
registering the extracted vertex data in packets (106); and
arraying said packets (106) in which said extracted vertex data have been registered, into a display list (108).

16. A program which can be read and executed by a computer, comprising the steps of:
fragmenting object data (112) read from an external source for transfer to a data memory (58B), into a data length optimum for the storage capacity of said data memory (58B); and
adding corrective data required to generate an image which is to be generated with the fragmented data, when said object data (112) is fragmented.
